# EUROPÄISCHE PATENTSCHRIFT

(11) **EP 0 914 791 B1**
(45) Veröffentlichungstag und Bekanntmachung des Hinweises auf die Patenterteilung: **16.04.2003**
(21) Anmeldenummer: 98120307.8
(22) Anmeldetag: 27.10.1998
(51) Int. Cl.: A47J 27/09, A47J 27/62

(54) **Fernbedienbare Einrichtung für das Abdampfen von mit Überdruck betriebenen Gargefässen**
Remote controlled device for the exhaust of steam from pressure cooking devices
Dispositif de commande à distance pour l'échappement de vapeur de récipients de cuisson sous pression

(30) Priorität: 27.10.1997 DE 29719066 U
(43) Veröffentlichungstag der Anmeldung: 12.05.1999
(73) Patentinhaber: Synkrona AG, 6370 Stans (CH)
(72) Erfinder: Schultz, Horst Dipl.-Ing., 65239 Hochheim (DE)
(74) Vertreter: Blumbach, Kramer & Partner GbR

(56) Entgegenhaltungen:
- WO-A-97/30616
- DE-A- 3 836 099
- DE-A- 4 227 395
- FR-A- 2 481 100
- PATENT ABSTRACTS OF JAPAN vol. 014, no. 118 (C-0697), 6. März 1990 & JP 01 317411 A (FUJITSU GENERAL LTD), 22. Dezember 1989
- PATENT ABSTRACTS OF JAPAN vol. 013, no. 523 (C-657), 21. November 1989 & JP 01 212515 A (HITACHI HEATING APPLIANCE CO LTD), 25. August 1989

## Beschreibung

Die Erfindung betrifft eine fernbedienbare Einrichtung zum Abdampfen von unter Überdruck stehenden Gargefäßen.

Im Zuge einer immer schnelllebigeren und dennoch sicherheits- und gesundheitsbewußter werdenden Zeit, kommt den eingangs erwähnten Gargefäßen eine stetig wachsendere Bedeutung zu. Werden Speisen mit einem definierten Überdruck zubereitet, kann hierbei gegenüber herkömmlichen Garverfahren zum einen erheblich an Zeit gespart werden und können dennoch zum anderen Nährwerte in hohem Maße erhalten bleiben.

Obwohl die mit Überdruck betriebenen Gargefäße in der Regel Behältnisse sind, die sowohl hohen Sicherheitsanforderungen genügen als auch dauerhaft zuverlässig sind, besteht bei vielen Anwendern ein mehr oder weniger stark ausgeprägtes Unbehagen im Umgang mit den heißen unter Druck stehenden Kochgefäßen. Einerseits wird selbst bei zweckgemäßem Umgang durch den Abdampfvorgang am Ende des Garvorgangs ein heftiges Zischen, welches häufig mit dem Austritt heißer und feuchter Gase einhergeht, wahrgenommen, und andererseits ist dem Gargefäß von außen nicht oder nur sehr näherungsweise anzusehen, welche thermische Energie in dessen Inneren gespeichert ist. Wird beispielsweise vergessen, die Herdplatte oder das Kochfeld abzustellen, beginnt zunächst zwar in der Regel eine akustische Warneinrichtung lautstark auf den Überdruck hinzuweisen, jedoch kann in einer späten Phase, falls eine Verminderung der Wärmezufuhr oder ein geeignetes Abdampfen unterbleibt, ein Sicherheitsventil öffnen und es kann danach ein heftiger Austritt von überheizten, unter Druck stehenden Gasen sowie von Flüssigkeit erfolgen. Der genaue Zeitpunkt des Öffnens des Sicherheitsventils ist darüberhinaus stets unbekannt. Die hiermit einhergehende Verletzungsgefahr kann immens sein und dennoch muß sich der Benutzer der Kochstelle nähern, um entweder die Zufuhr von weiterer Wärmeenergie zu unterbinden oder muß sich überwinden, um den Überdruck durch gezieltes Abdampfen abzubauen, um so dem spontanen Öffnen des Sicherheitsventils vorzubeugen.

Es ist zwar bekannt, mittels Fernthermometern den Zustand von Gargut bzw. Speisen zu erfassen und für die weitere Zubereitung der Speisen zu berücksichtigen; jedoch ist die reine Temperaturanzeige kein Maß für den Druck bzw. für die im unter Druck stehenden Gargefäß gespeicherte Energie. Selbst bei Benutzung von Drucksensoren könnte sich lediglich die Aussage gewinnen lassen, daß ein Öffnen der Sicherheitseinrichtungen unmittelbar bevorsteht ohne daß auch hier eine genaue Aussage über den Zeitpunkt getroffen werden kann. Ferner müßte man sich selbst bei den vorstehend beschriebenen Gargefäßen in deren unmittelbare Nähe begeben, um diese gezielt abzudampfen oder die weitere Zufuhr von Wärme zu unterbinden.

Der Erfindung liegt folglich die Aufgabe zugrunde, die vorstehend beschriebenen Nachteile zu vermeiden und einen sichereren sowie weniger belastenden Umgang mit den Gargefäßen der eingangs geschilderten Art zu gestatten.

Die Erfindung wird auf höchst überraschend einfache Weise bereits mit den Merkmalen der Ansprüche 1, 20 und 21 gelöst.

Erstmals mit der Erfindung wird es möglich, dem im Innenraum eines Gargefäßes herrschenden Überdruck aus der Ferne abzubauen, um daraufhin auf sichere Art und Weise die Wärmezufuhr und/oder den Garvorgang beenden zu können. Mit der erfindungsgemäßen Einrichtung kann insbesondere die emotionale Belastung im Umgang mit den auch als Dampfdrucktöpfen bezeichneten Gargefäßen stark vermindert werden.

Gemäß der Erfindung kann ein mit einer zugeordneten Empfangseinrichtung verbundener Aktuator ein Stellglied zur Freigabe einer Öffnung des Gargefäßes fernbedient betätigen und hierdurch den gewünschten Abdampfvorgang aus der Ferne und vollkommen gefahrlos bewirken.

In vorteilhafter Weise kann die Fernbedienung und/oder die fernbedienbare Einrichtung eine Zeitschaltuhr umfassen, durch welche ein akustisches oder optisches Signal ausgegeben wird, das den Benutzer an das bevorstehende Ende des Garvorgangs erinnert.

In weiterer erfindungsgemäßer Ausgestaltung kann jedoch auf ebenfalls höchst vorteilhafte Weise bereits der Abdampfvorgang zeitlich zugeordnet durch die Zeitschaltuhr selbst bewirkt werden. Stellt man beispielsweise für den Abdampfvorgang eine geringfügig längere Zeit als für eine mit einer Zeitschaltuhr betriebene Herdplatte ein, können Speisen ohne weiteres Zutun gegart werden und wird zuverlässig sichergestellt, daß eine nährwertschonende Garzeit unter Überdruck so gering wie möglich gehalten wird.

In weiterer höchst vorteilhafter Ausgestaltung kann sowohl in der Fernbedienung als auch in der fernbedienbaren Einrichtung eine bidirektionale Sende/Empfangseinrichtung angeordnet sein, mit welchen die Signale von an der fernbedienbaren Einrichtung angeordneten Sensoren übertragbar sind.

Mit an der Fernbedienung und/oder am Gargefäß angebrachten Anzeigeeinrichtungen lassen sich die Zustände innerhalb des Gargefäßes dann auch aus der Ferne erfassen. So kann der Benutzer seinen gewohnten alltäglichen Tätigkeiten nachgehen und kann mit einem einfachen Blick auf die Anzeigeeinrichtung der Fernbedienung erkennen, wie weit der Garvorgang vorangeschritten ist und ob bei abnormalen Druckoder Temperaturzuständen Handlungsbedarf gegeben ist, oder nicht. Ferner kann auch aus der Ferne, etwa von anderen Zimmern innerhalb des gleichen Gebäudes aus ein gezieltes Abdampfen vorgenommen werden und können kritische Situationen stets sicher umgangen werden.

In höchst vorteilhafter Weise kann die Fernbedienung und/oder die fernbedienbare Einrichtung eine LCD-Anzeige umfassen, welche u.U. die bereits verstrichene Garzeit, die noch benötigte Garzeit, die aktuelle Temperatur, den aktuellen Druck, Extremwerte von Temperatur und/oder Druck oder etwa Warnungen, wie die vorstehend erwähnten, umfaßt. Ferner können durch die Anzeigeeinrichtung entweder in Form farbiger Leuchtdioden Garzustände, wie grün für normalen Garbetrieb, orange für grenzwertigen Zustand und rot für abnormaler Garbetrieb, oder entsprechende Angaben in einer LCD-Anzeige, wie beispielsweise "Druckentlastung / Temperaturabsenkung nötig", angezeigt werden.

In äußerst vorteilhafter Weise kann an der fernbedienbaren Einrichtung und/oder an der Fernbedienung ein Sprachausgabechip mit zugehörigem Kleinstlautsprecher angeordnet sein, der bereits vor oder im Bereich grenzwertiger Zustände akustische Warnungen, wie "Achtung grenzwertiger Bereich droht / erreicht" oder "Achtung, bitte Temperatur absenken", ausgibt.

Eine lange Lebensdauer der Batterien zur Speisung der erfindungsgemäßen Einrichtungen wird durch eine automatische Abschalteinrichtung erhalten, die nur während sehr kurzer Zeitintervalle prüft, ob durch die Fernbedienung Signale gesendet werden und ohne Vorliegen von entsprechenden Empfangssignalen die Energiezufuhr von den Batterien unterbricht. Das Verhältnis der eingeschalteten zu ausgeschalteten Zustände kann je nach Abfragefrequenz im Bereich von 1 : 10, 1 : 100 sowie 1 : 1.000 oder mehr liegen. Es wird dabei eine im wesentlichen um den gleichen Faktor verlängerte Lebensdauer der verwendeten Batterien erhalten.

Ferner liegt es im Rahmen der Erfindung, ausgelöst durch die Abschalteinrichtung kurzzeitig die Sensoren abzutasten, um bei kaltem oder nicht unter Druck stehendem Gargefäß eine längere Abschaltung oder längere Abfragezeiträume zu bewirken. Es liegt darüber hinaus auch im Rahmen der Erfindung, eine automatisierte Einschaltung dann durchzuführen, wenn sich die Druck- und/oder Temperaturwerte denjenigen, die für übliche Garvorgänge benutzt werden, nähern.

Eine äußerst flexible sowie nachrüstbare Ausführungsform der Erfindung wird bereitgestellt, wenn die fernbedienbare Einrichtung ein Gehäuse aufweist, welches auch nachträglich, beispielsweise am Deckel eines herkömmlichen Gargefäßes anbringbar ist.

Eine weitere sehr vorteilhafte Ausführungsform umfaßt ein Gehäuse, welches zwischen den Griffleisten eines Gargefäßes, wie es z.B. in der Offenlegungsschrift EP-A-0 720 829 beschrieben ist, angeordnet werden kann. Der bereits ergonomisch gestaltete Griff wird dann durch die Erfindung in seiner Funktion nicht beeinträchtigt und es werden für den Benutzer äußerst gut zugängliche und ergonomisch günstige Bereiche, etwa für die Anzeige der Druck- und/oder Temperaturzustände sowie für den manuellen Umgang mit dem Gargefäß bereitgestellt.

Beliebige Gargefäße lassen sich dann mit einer erfindungsgemäßen Einrichtung nachrüsten, wenn das Gehäuse der erfindungsgemäßen fernbedienbaren Einrichtung mit einem fluiddichten Bajonett versehen ist, welches in eine zugeordnete Öffnung des Gargefäßes einsetzbar ist.

Eine weitere bevorzugte Ausführungsform umfaßt ein fernbedienbare Einrichtung, die ein komplettes Abdampfventil enthält, und zusammen mit dem Abdampfventil an dem Gargefäß anbringbar ist. Hierzu kann das Gehäuse der fernbedienbaren Einrichtung mit einer ringförmigen Halterung versehen sein, die unter einer Schulter der Dichtung des Überdruckventils befestigbar ist.

Die Reichweite der Sende/Empfangseinrichtung wird dadurch stark erweitert, daß im Falle von Funksignalen die Antenne der Sende/Empfangseinrichtung der fernbedienbaren Einrichtung durch Ankopplung an Teile eines metallischen Gargefäßes gebildet oder ergänzt wird.

Die Erfindung wird nachfolgend anhand bevorzugter Ausführungsformen unter Bezugnahme auf die beigefügten Zeichnungen detaillierter beschrieben.
Es zeigen:
- Fig. 1: eine Fernbedienung sowie eine Querschnittsansicht durch eine erste Ausführungsform einer an einem Gargefäß gemäß der EP-A-0 710 829 angebrachten fernbedienbaren Einrichtung,
- Fig. 2: einen Querschnitt durch eine zweite Ausführungsform einer erfindungsgemäßen fernbedienbaren Einrichtung in einer waagrechten Ebene,
- Fig. 3: einen Querschnitt durch die zweite erfindungsgemäße Ausführungsform in einer vertikal verlaufenden Ebene
- Fig. 4: eine vertikal verlaufende Querschnittsansicht durch eine dritte Ausführungsform einer fernbedienbaren Einrichtung, die in ein Gargefäß, welches dem Gegenstand der WO 91/18543 stark ähnelt, integriert ist.

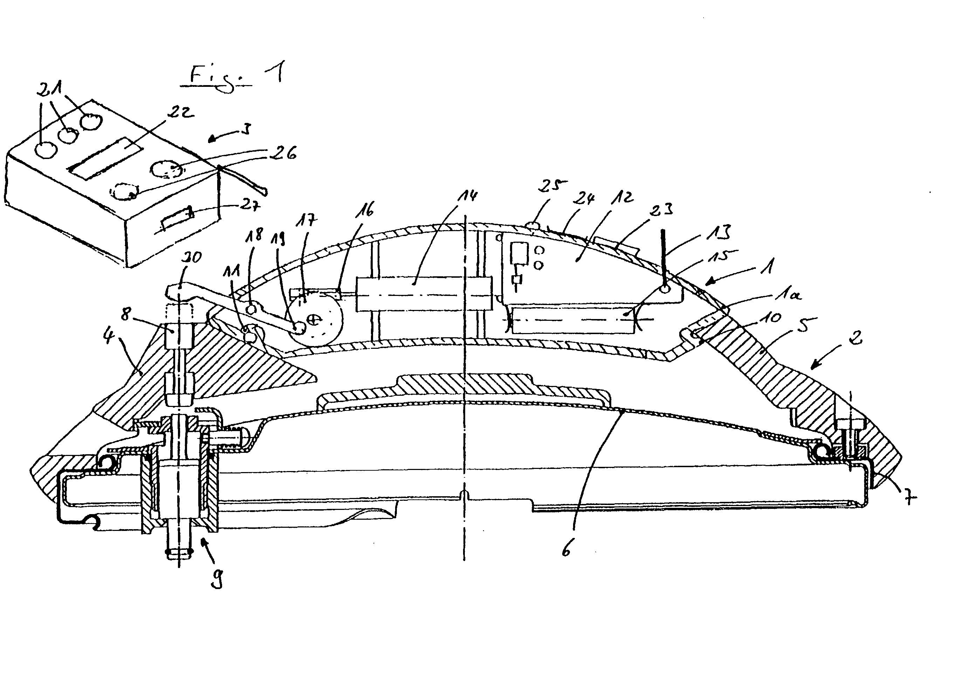

Nachfolgend wird zunächst auf Fig. 1 Bezug genommen, welche eine erste bevorzugte Ausführungsform der Erfindung beispielhaft darstellt.

Dargestellt ist eine erfindungsgemäße fernbedienbare Einrichtung 1, die an einem gemäß der Druckschrift EP-A-0 720 829 ausgebildeten Deckel 2 eines Gargefäßes angeordnet ist, sowie eine der fernbedienbaren Einrichtung 1 zugeordnete Fernbedienung 3.

Die fernbedienbare Einrichtung 1 ist zwischen zwei (aufgrund der Querschnittsansicht nicht dargestellten) sich im wesentlichen parallel erstreckenden bogenförmigen Trägern des Deckels 2 angeordnet, die an ihren beiden Enden durch Halteabschnitte 4, 5 miteinander verbunden sind. Die Halteabschnitte 4, 5 sind an einem den Außenumfang des im wesentlichen kreisförmigen, leicht nach oben gewölbten Grundkörpers 6 des Deckels 2 umgreifenden Schließring 7 befestigt.

Im Halteabschnitt 4 ist ein längsverschiebliches Betätigungsorgan 8 durch sein eigenes Gewicht in der unteren Endstellung gehalten und befindet sich in geschlossener Stellung des Deckels 2 in etwa über dem im Grundkörper 6 angeordneten Ventil 9 von wo aus es bei Druckerhöhung im Inneren des Gargefäßes in seine obere Endgestellung gehoben wird.

Für eine weitergehende Beschreibung des in der Fig. 1 dargestellten Deckels 2 sowie der speziellen Ausgestaltung des Ventils 9 wird auf die vorstehend zitierte Druckschrift EP-A-0 720 829, deren Inhalt durch Bezugnahme auch zum Gegenstand der vorliegenden Beschreibung gemacht wird, verwiesen.

Das Gehäuse 1a der fernbedienbaren Einrichtung 1 ist in seiner nach außen gewölbten Form den zwischen den Halteabschnitten 4 und 5 angeordneten Trägern angepaßt und weist zum Einsetzen in die schlitzförmige Öffnung zwischen den beiden Trägern eine ebenfalls an diese angepaßte geringe Breitenabmessung auf. Ein am Gehäuse 1a angeordneter Vorsprung 10 hintergreift einen Bereich des Halteabschnittes 5. Für eine wieder lösbare Befestigung der fernbedienbaren Einrichtung 1 ist ferner an dem am Halteabschnitt 4 anliegenden Gehäusebereich eine Öse 11 zur Aufnahme eines Federbolzens angeordnet, der mit seinen beiden Enden zwischen den Trägern festgeklemmt wird oder beispielsweise auch in entsprechende, an den Trägern ausgebildete Führungsund Rastmulden eintaucht.

Es sei erwähnt, daß weitere, nicht dargestellte, jedoch dem Fachmann an sich bekannte Befestigungseinrichtungen, sowohl für eine wieder lösbare Befestigung als auch für eine dauerhafte Befestigung der fernbedienbaren Einrichtung 1 vorgesehen sein können.

Das Gehäuses 1a umfaßt eine Empfangseinheit 12 mit einer Schalt- und Steuerelektronik und einer sich teilweise aus dem Gehäuse 1a erstreckenden Antenne 13. Ferner weist das Gehäuse 1a einen mittels der Elektronik betätigbaren Getriebemotor 14 auf, der vorzugsweise einen handelsüblichen Elektromotor enthält. Die Stromversorgung wird durch eine im Inneren des Gehäuses 1a angeordnete Batterie 15 sichergestellt, welche durch ein in der Fig. 1 nicht dargestelltes abnehmbares Gehäuseteil ausgewechselt werden kann. Es liegt im Rahmen der Erfindung sowohl dieses Gehäuseteil als auch das Gehäuse 1a fluiddicht auszubilden.

Bei Betätigung des Motors 14 treibt dieser eine Schnecke 16 an, die mit einem ihr zugeordneten Schneckenrad 17 in kämmendem Eingriff steht. Ein schwenkbar angeordneter Umlenkhebel 18 ist mit seinem einen Ende 19 in exzentrischer Anordnung an dem Schneckenrad 17 gelagert. Das zweite oder Eingriffende 20 des Umlenkhebels 18 reicht durch eine Öffnung des Gehäuses 1a nach außen und befindet sich in etwa mittig über dem Betätigungsorgan 8.

Bei der in Fig. 1 dargestellten Stellung des Umlenkhebels 18 kann das Betätigungsorgan 8 ohne eine Behinderung des Eingriffendes 20 bei Druckerhöhung im Inneren des Gargefäßes in seine obere, gestrichelt dargestellte Endstellung gehoben werden. Zum Abdampfen oder zum nährwertschonenden Garen bei nur minimalem Überdruck wird das Schneckenrad 17 durch die von dem Motor 14 angetriebene Schnecke 16 gemäß der in Fig. 1 dargestellten Anordnung so weit nach rechts verdreht, daß das Eingriffende 20 bis zu einer gewünschten Stellung nach unten geschwenkt ist, und hierdurch das Betätigungsorgan 8 nur noch bis zu einer verminderten oberen Endstellung gehoben werden kann. Durch das dabei bewirkte Zurücktreten des Ventils 9 können bei Überdruck im Innern des Gargefäßes unter Druck stehende Gase aus dem Gargefäß am Ventil 9 vorbeistreichen und nach außen entweichen.

Die Betätigung des Motors 14 erfolgt unter Ansprechen auf ein entsprechendes von der Empfangseinheit 12 empfangenes Steuersignal, welches insbesondere von der Fernbedienung 3 mit einer der Empfangseinheit 12 zugeordneten Sendeeinheit ausgesendet wird.

Die Signalübertragung zwischen der Fernbedienung 3 und der fernbedienbaren Einrichtung 1 erfolgt je nach Ausführung der erfindungsgemäßen Einrichtung mittels Infrarot, Ultraschall und/oder Funk, wobei im Falle der Funkübertragung die Reichweite der Signalübertragung durch Ankopplung der Antenne 13 an metallische Teile des Gargefäßes stark erweitert sein kann.

Die Fernbedienung 3 weist ein Bedienungsfeld 21 auf, über welches verschiedene Steuerfunktionen für die fernbedienbare Einrichtung 1 eingestellt bzw. verändert und/oder das Aussenden entsprechender Steuersignale ausgelöst werden können.

Im bevorzugter Ausgestaltung kann über das Bedienungsfeld 21 das Heben und Absenken des Eingriffendes 20 bis in eine gewünschte Endstellung voreingestellt werden, um beispielsweise zwischen einem vollständigen Abdampfen des Gargefäßes und einem nährwertschonenden Garen bei mittlerem Druck wählen zu können. Dieser mittlere Druck kann über nachfolgend noch detailierter beschriebene am Gargefäß angebrachte, jedoch in den Figuren nicht dargestellte Sensoren erfasst und der Fernbedienung 3 oder der fernbedienbaren Einrichtung 1 übermittelt werden. Eine jeweilige Steuereinheit kann dann das Öffnen druckabhängig jedoch automatisiert wie vorstehend beschrieben bewirken.

Ferner ist über das Bedienungsfeld 21 eine in der Fernbedienung 3 integrierte Zeitschaltuhr programmierbar, so daß ein bestimmtes Steuersignal zu einer vorbestimmten Zeit selbsttätig durch die Fernbedienung 3 ausgesendet wird. Zur visuellen Anzeige einzelner vorbestimmter bzw. vorgewählter Einstellungen weist die Fernbedienung 3 ein Sichtfenster 22 mit einer LCD-Anzeige auf.

Gemäß Fig. 1 umfaßt auch die fernbedienbare Einrichtung 1 ein Bedienungsfeld 23, ein Sichtfenster 24 mit LCD-Anzeige und eine in der Empfangseinheit integrierte Zeitschaltuhr, so daß im wesentlichen alle vorstehenden Einstellungen, wie beispielsweise ein definiertes Absenken und/oder Heben des Eingriffendes 20 des Umlenkhebels 18 zu einer vorbestimmten Zeit auch unmittelbar an der ferbedienbaren Einrichtung selbst vorgewählt werden können. Hierbei ist jedoch vorgesehen, daß von der Fernbedienung 3 ausgesendete Signale von der Empfangseinheit 12 als vorrangig angesehen werden, um dem Anwender im Bedarfsfall ein Eingreifen in den Garvorgang aus der Ferne zu ermöglichen.

In erfindungsgemäßer Ausgestaltung weisen sowohl die Fernbedienung 3 als auch die fernbedienbare Einrichtung 1 jeweils eine Sende-/Empfangseinheit auf, die eine bidirektionale Kommunikation zwischen beiden Modulen ermöglicht.

Während eines Garvorgangs können so dem Benutzer über die LCD-Anzeige 22 der Fernbedienung 3 beispielsweise auch von der fernbedienbaren Einrichtung 1 kommende Informationen über das Ausführen vorgewählter Funktionen, wie z.B. "Abdampfvorgang eingeleitet" oder "Auf nährwertschonendes Garen umgestellt", angezeigt werden. Für eine verbesserte optische Anzeige sind darüber hinaus verschiedenfarbige Leuchtdioden 25 und 26 an der fernbedienbaren Einrichtung 1 bzw. an der Fernbedienung 3 vorgesehen. Die Fernbedienung 3 und gegebenenfalls die fernbedienbare Einrichtung 1 umfaßt ferner eine kleine Lautsprechereinheit 27, wodurch auch eine akustische Anzeige einzelner Zustände gewährleistet wird.

Der Benutzer wird über die Anzeigeeinheiten fortwährend über die momentanen Einstellungen während des Garvorgangs informiert. Er hat darüber hinaus die Möglichkeit einzelne Einstellungen, den momentanen Zustand und/oder die verbleibende Garzeit über das Bedienungsfeld 21 der Fernbedienung 3 abzufragen und wird bei einer Änderung des Zustandes oder bei Beendigung des Garvorgangs optisch und/oder akustisch mittels der LCD-Anzeige, der Leuchtdioden und/oder des des Lautsprechers 27 darüber jeweils in Kenntnis gesetzt. Im Bedarfsfall ist es somit für den Benutzer ein leichtes, mit der Fernbedienung 3 zu jeder Zeit regulierend in den Garvorgang einzugreifen.

Im Rahmen der Erfindung liegt es ferner, die fernbedienbare Einrichtung 1 mit druck- und/oder temperaturempfindlichen Sensoren auszustatten. So kann beispielsweise die Außentemperatur des Grundkörpers 6 erfaßt werden oder durch am Ventil 9, am Betätigungsorgan 8 und/oder an der Unterseite des Eingriffsendes 20 angeordnete Sensoren der Druck im Inneren des Gargefäßes ermittelt werden. Ferner können im Innern des Gargefäßes Sensoren mit fluiddicht nach außen geführten Signalleitungen angeordnet sein oder auf andere Weise mit der Empfangseinheit der fernbedienbaren Einrichtung und/oder der Fernbedienung kommunizieren.

Nach Auswertung der von den Sensoren übermittelten Signale in der fernbedienbaren Einrichtung 1 oder in der Fernbedienung 3 werden dem Benutzer während des Garvorgangs einzelne Zustände, wie z.B. die aktuelle Temperatur, der aktuelle Druck, angezeigt. Über einen an der fernbedienbaren Einrichtung 1 und/oder an der Fernbedienung 3 angeordneten Sprachausgabechip, können bei erfaßten grenzwärtigen Zuständen auch akustische Warnungen, wie beispielsweise "Achtung zu hoher Druck", "Bitte Temperatur absenken" oder ähnliche Warnungen, ausgegeben werden.

Die ausgewerteten Signale der Sensoren können jedoch auch ein atomatisches Auslösen einzelner Funktionen der fernbedienbaren Einrichtung, beispielsweise infolge der Voreinstellung eines bestimmten "Garablaufs", und gegebenenfalls ein Ein- bzw. Ausschalten der fernbedienbaren Einrichtung insgesamt bewirken.

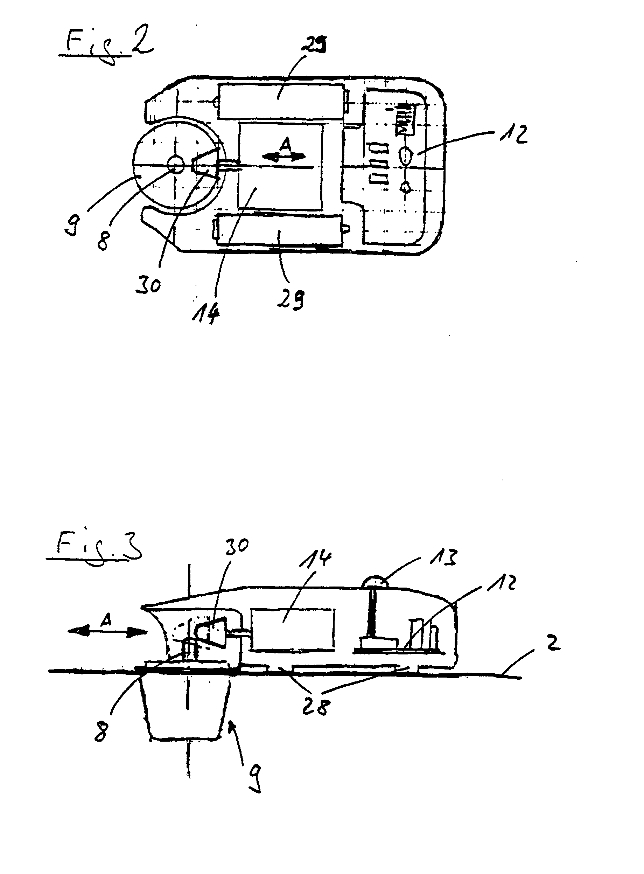

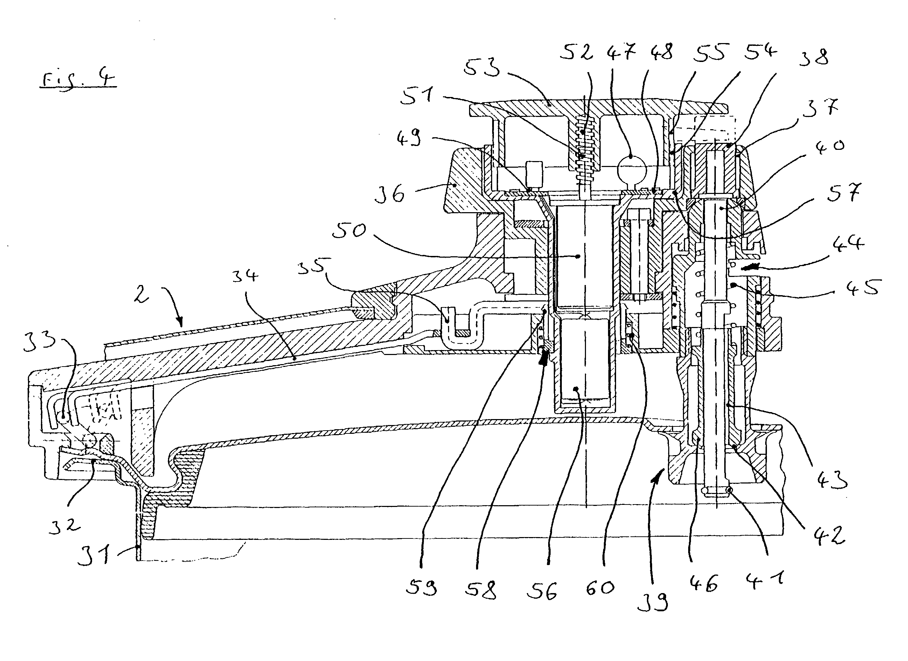

Die Fig. 2 und 3, bei welchen Bauteile die denen der Fig. 1 gleichen oder in deren Wirkung gleich sind, mit denselben Bezugsziffern belegt sind, zeigen eine weitere beispielhafte Ausführungsform einer fernbedienbaren Einrichtung, die unmittelbar am Deckel 2 eines Gargefäßes befestigt ist.

Für die Befestigung können verschiedene Maßnahmen vorgesehen sein. Diese Maßnahmen reichen von einer einfachen, vorzugsweise wieder lösbaren Klebeverbindung über eine Verbindung mittels beispielsweise in den Auflagefüßen 28 angeordneten Magneten bis hin zu Rast- und/oder Klemmeinrichtungen, die in komplementär ausgebildete an dem Deckel 2 angeordnete Einrichtungen eingreifen.

Auch eine einfache Schraub- oder Bajonett-Verbindungseinrichtung, welche in eine zugeordnete Öffnung des Gargefäßes einsetzbar ist, liegt im Rahmen der Erfindung, wobei bei einer die Außenummantelung des Gargefäßes durchdringenden Öffnung eine fluiddichte Abdichtung dieser Verbindung vorgesehen ist.

Die Sende-/Empfangseinheit 12 mit der Antenne 13 ist für das Senden und Empfangen eines codierten digitalen Funksignals ausgebildet. Mit Hilfe zweier in der fernbedienbaren Einrichtung angeordneten NC-Akkus oder Alkali-Mangan-Batterien 29 wird auf ein entsprechendes Signal hin ein kleiner Elektromagnet oder Elektromotor 14 angesteuert. Der Elektromotor oder Elektromagnet 14 weist eine Gewindeachse zur Ausführung einer Axialbewegung auf, so daß ein zugeordneter keilförmig ausgebildeter Stößel 30 in Längsbewegung in einer der Richtungen der Pfeile A getrieben wird.

Infolge der keilförmigen Ausbildung des Stößels 30 wird bei einer Linearbewegung nach links gemäß der in den Fig. 2 und 3 dargestellten Anordnung ein zum Abdampfen mit einem Ventil 9 in Verbindung stehendes Betätigungsorgan 8 nach unten gedrückt, so daß je nach Bedarf ein vollständiges Abdampfen des Gargefäßes oder ein Garen bei einem definierten mittleren Druck ermöglicht wird. Bei einer entsprechenden Linearbewegung des Stößels nach rechts kann das Betätigungsorgan 8 bis in seine obere Endstellung hochgedrückt werden, so daß der maximale Überdruck innerhalb des Gargefäßes erreicht werden kann.

Die Erfindung umfaßt ferner Ausführungsformen der fernbedienbaren Einrichtung, welche beispielsweise unmittelbar in den Deckel eines Gargefäßes integriert sind bzw. den Deckel eines Gargefäßes selbst ausbilden und/oder ein komplettes Abdampfventil umfassen und zusammen mit dem Abdampfventil an dem Gargefäß befestigbar sind.

Eine vierte erfindungsgemäße, in den Deckel eines Gargefäßes integrierte Ausführungsform ist der Figur 4 zu entnehmen. Die in Figur 4 dargestellte, in etwa in der Mitte des Gargefäßes vertikal verlaufende Querschnittsansicht zeigt ein Gargefäß, welches funktional im wesentlichen mit den in der WO 91/18543 beschriebenen Gargefäßen übereinstimmt. Durch Bezugnahme wird der Gegenstand der WO 91/18543 in den Offenbarungsgehalt der hier vorliegenden Beschreibung vollumfänglich mit aufgenommen. Bei der nachfolgenden Beschreibung werden jedoch konstruktive Weiterentwicklungen detaillierter verdeutlicht.

Das in Figur 4 dargestellte Gargefäß weist einen Deckel 2 sowie einen topfförmigen Garbehälter 31 mit einem oberen, seitlich in radialer Richtung ausgkragenden Rand 32 auf. Ein seitlich nach außen schwenkbares Hebelelement 33 betätigt ein in den Figuren nicht dargestelltes Verschlußelement, welches den seitlichen Rand 32 verriegelnd untergreifen kann. Zur Betätigung des Verschlußelementes wird ein längsverschieblich gehaltenes Betätigungsorgan 34, welches am einen Ende das Hebelelement 33 gabelförig übergreift und an dessen anderem Ende durch eine Zug/Schubstange 35 bewegt wird, in dessen Längsrichtung verschoben. Diese Längsverschiebung wird der Zug/Schubstange 35 wie in der WO 91/18543 beschrieben durch eine Drehbewegung des Deckelgriffs 36 mitgeteilt.

Im Bereich der rechten Seite weist der Deckelgriff 36 eine über ein Kreissegment verlaufende und nach oben offene Ringnut 37 auf, in welche der Betätigungsknopf 38 des Abdampfventils 39 derart ragt, daß die Drehbewegung des Deckelgriffs 36 nicht behindert und eine Betätigung des Knopfes 38 von oben her ermöglicht wird.

Ohne Beschränkung der Allgemeinheit kann als Abdampfventil 39 nahezug jedes von oben her durch eine Druckbetätigung zu öffnende Abdamfpventil Verwendung finden. Bei der in Figur 4 dargestellten Ausführungsform wird zum Öffnen des Ventils 39 der längsverschiebliche Ventilkörper 40 nach unten bewegt, wodurch die Ringdichtung 41 von deren dichtender Anlage an der Ringschulter 42 wegbewegt wird. In dieser nach unten bewegten Stellung des Ventilkörpers 40 wird ein Fluidkanal 43, der durch die Auslaßöffnung 44 mit der Umgebung kommuniziert, gegen die Kraft der Feder 45 freigegeben. Bei zu großem Überdruck im Gargefäß tritt ferner der Ventilkörper 46 entgegen der Kraft der Feder 45 in Figur 4 nach oben zurück und gibt ebenfalls eine Verbindung zur Außlaßöffnung 44 frei.

Nachfolgend werden die Bestandteile der erfindungsgemäßen fernbedienbaren Einrichtung detaillierter erläutert.

Mit der Antenne 47 werden den Platinen 48, 49 elektrische Signale zugeführt, die wie bei den vorstehend beschriebenen Ausführungsformen umgesetzt und neben anderem zur Betätigung eines Elektromotors 50 verwendet werden.

An der Welle des Elektromotors 50 ist eine selbsthemmende Gewindeschraube 51 angebracht, die in einer zugehörigen Gewindebohrung 52 in der achsial verschieblichen, tassenförmigen Deckelkappe 53 angeordnet ist. Durch eine Drehbewegung der Gewindeschraube 51 mittels des Motors 50 kann die Deckelkappe 53 gehoben und gesenkt werden. Um hierbei eine Verdrehung der Deckelkappe 53 sicher zu vermeiden ist zumindest ein seitlich nach innen ragender Vorsprung 54 des topfförmigen Oberteils 57 der fernbedienbaren Einrichtung in einer Längsnut 55 der Deckelkappe 53 gehalten.

Beim Senken der Deckelkappe 53 übergreift deren radial auskragender Rand den Betätigungsknopf 38 des Abdampfventils 39 und öffnet hierbei das Ventil durch Absenken des Ventilkörpers 40. Beim Anheben der Deckelkappe 53 wird der Ventilkörper 40 vermittels der Kraft der Feder 45 wieder nach oben bewegt und das Garefäß fluiddicht geschlossen.

Zur Stromversorgung ist unterhalb des Elektromotors 50 eine Batterie 56 zwischen den dieser zugeordneten Anschlußkontakten gehalten.

Die gesamte fernbedienbare Einrichtung dieser erfindungsgemäßen Ausführungsform kann zu Reinigungszwecken oder zum Wechsel der Batterie 56 dem Deckel 2 entnommen werden, da diese an deren Unterteil mit einem Bajonettverschluß 58 gehalten ist. Durch eine seitliche Drehbewegung der Deckelkappe 53 relativ zum Deckelgriff 36 wird der seitliche auskragende Bajonettabschnitt der fernbedienbaren Einrichtung hinter dem mit der Kraft der Feder 60 achsial vorgespannten Bajonettsitz 59 mit definierter achsialer Vorspannung verriegelt oder durch eine Drehbewegung in entgegengesetzter Richtung aus dem verriegelten und achsial vorgespannten Sitz gelöst.

Nach dem Lösen der Bajonettverriegelung kann die gesamte fernbedienbare Einrichtung mittels der Deckelkappe 53 nach oben entnommen werden.

Um die Betriebsdauer von in der erfindungsgemäßen fernbedienbaren Einrichtung angeordneten Batterien oder Akkumulatoren zu verlängern, kann die fernbedienbare Einrichtung ferner eine automatische Abschalteinrichtung umfassen, die nur während sehr kurzer Zeitintervalle prüft, ob beispielsweise von der Fernbedienung Signale ausgesendet werden, ob eine voreingestellte Garzeit abgelaufen ist und/oder ob durch Druck und/oder Temperatursensoren Zustände erfaßt werden, auf die eine entsprechende, beispielsweise voreingestellte Reaktion der erfindungsgemäßen Einrichtung erfolgen soll. Ohne ein Vorliegen entsprechender Informationen kann somit die Energiezufuhr durch die Batterien oder Akkus unterbrochen werden bzw. bei einem kalten oder nicht unter Druck stehenden Gargefäß eine längere Abschaltung der fernbedienbaren Einrichtung insgesamt bewirkt werden. Das Verhältnis der eingeschalteten zu den ausgeschalteten Zuständen kann hierbei im ungefähren Bereich von 1 : 10 bis 1 : 1000 liegen.

### Bezugszeichen

| | |
|---|---|
| fernbedienbare Einrichtung | 1 |
| Gehäuse | 1a |
| Deckel | 2 |
| Fernbedienung | 3 |
| Halteabschnitte | 4, 5 |
| Grundkörpers des Deckels 2 | 6 |
| Schließring | 7 |
| längsverschiebliches Betätigungsorgan | 8 |
| Ventil | 9 |
| am Gehäuse 1a angeordneter Vorsprung | 10 |
| Öse | 11 |
| Empfangseinheit | 12 |
| mit einer Schalt- und Steuerelektronik | |
| Antenne | 13 |
| Getriebemotor | 14 |
| Batterie | 15 |
| Schnecke | 16 |
| Schneckenrad | 17 |
| schwenkbar angeordneter Umlenkhebel | 18 |
| das eine Ende von 18 | 19 |
| das zweite oder Eingriffende des Umlenkhebels 18 | 20 |
| Bedienungsfeld | 21 |
| Sichtfenster mit LCD-Anzeige | 22 |
| Bedienungsfeld | 23 |
| Sichtfenster von 22 | 24 |
| Leuchtdioden | 25, 26 |
| Lautsprechereinheit | 27 |
| Auflagefüße | 28 |
| Batterien | 29 |
| keilförmig ausgebildeter Stößel | 30 |
| Garbehälter | 31 |
| Rand | 32 |
| Hebelelement | 33 |
| Betätigungsorgan | 34 |
| Zug/Schubstange | 35 |
| Deckelgriffs | 36 |
| Ringnut | 37 |
| Betätigungsknopf | 38 |
| Abdampfventil | 39 |
| Ventilkörper | 40 |
| Ringdichtung | 41 |
| Ringschulter | 42 |
| Fluidkanal | 43 |
| Auslaßöffnung | 44 |
| Feder | 45 |
| Ventilkörper | 46 |
| Antenne | 47 |
| Platinen | 48, 49 |
| Elektromotor | 50 |
| Gewindeschraube | 51 |
| Gewindebohrung | 52 |
| Deckelkappe | 53 |
| Vorsprung | 54 |
| Längsnut | 55 |
| Batterie | 56 |
| Oberteils | 57 |
| Bajonettverschluß | 58 |
| Bajonettsitz | 59 |
| Feder | 60 |

## Patentansprüche

1. Fernbedienbare Einrichtung zum Abdampfen von unter Überdruck stehenden Gargefäßen umfassend:
- eine Fernbedienung (3) mit einer Sendeeinrichtung,
- eine an der fernbedienbaren Einrichtung angeordnete, der Sendeeinrichtung zugeordnete Empfangseinrichtung (13; 47, 48, 49),
- einen mit der Empfangseinrichtung (13; 47, 48, 49) verbundenen Aktuator (14; 50) und
- eine Energieversorgungseinrichtung (15; 56), mittels welcher die Empfangseinrichtung (13; 47, 48, 49) und der Aktuator (14; 50) speisbar sind,
wobei durch den Aktuator (14; 50) zumindest ein Stellglied (8; 40) zur Freigabe einer Öffnung (44) des Gargefäßes betätigbar ist.

2. Fernbedienbare Einrichtung nach Anspruch 1, **dadurch gekennzeichnet, daß** die Sendeeinrichtung (3) und/oder die Empfangseinrichtung (13; 47, 48, 49) eine Zeitschaltuhr umfasst/umfassen.

3. Fernbedienbare Einrichtung nach Anspruch 1 oder 2, **dadurch gekennzeichnet, daß** die Signalübertragung zwischen Sendeeinrichtung (3) und Empfangseinrichtung (13; 47, 48, 49) mittels Infrarot, Funksignalen oder per Ultraschall erfolgt.

4. Fernbedienbare Einrichtung nach Anspruch 1, 2 oder 3, **dadurch gekennzeichnet, daß** das vom Aktuator (14; 50) betätigte Stellglied (8; 40) Teil eines Abdampfventils (9; 39) ist.

5. Fernbedienbare Einrichtung nach Anspruch 1, 2, 3 oder 4
**dadurch gekennzeichnet, daß** eine bidirektionale Sende/Empfanganseinrichtung jeweils in der Fernbedienung (3) und in der fernbedienbaren Einrichtung angeordnet sind, wobei die Fernbedienung (3) mit einer Anzeige (22) für die Druck- und/oder Temperaturverhältinisse versehen ist.

6. Fernbedienbare Einrichtung nach Anspruch 5, **dadurch gekennzeichnet, daß** die Anzeigeeinrichtung (22) eine Signaleinrichtung zur Anzeige abnormaler Garzustände umfaßt.

7. Fernbedienbare Einrichtung nach Anspruch 5 oder 6, **dadurch gekennzeichnet, daß** die Anzeigeinrichtung (22) eine Sprachausgabeeinheit (27) umfasst.

8. Fernbedienbare Einrichtung nach einem der vorstehenden Ansprüche, **dadurch gekennzeichnet, daß** der Aktuator einen Getriebemotor (14) und einen Schneckentrieb umfaßt (16, 17).

9. Fernbedienbare Einrichtung nach Anspruch 8 **dadurch gekennzeichnet, daß** der Aktuator (14) ein kegelstumpfförmiges Betätigungsorgan (30) mit seitlicher Anlagefläche umfaßt, welches in axialer Richtung verstellbar ist.

10. Fernbedienbare Einrichtung nach nach Anspruch 8, **dadurch gekennzeichnet, daß** der Aktuator (14) einen Umlenkhebel (18) umfaßt, der mittels eines exzentrischen Betätigungsorgans (17) bewegbar ist.

11. Fernbedienbare Einrichtung nach einem der vorstehenden Ansprüche, ferner **gekennzeichnet durch** ein Gehäuse (1), welches zwischen Griffleisten eines zugeordneten Gargefäßes anordenbar ist.

12. Fernbedienbare Einrichtung nach Anspruch 8, **dadurch gekennzeichnet, daß** das Gehäuse (1) der fernbedienbaren Einrichtung mit einem fluiddichten Bajonet (58) versehen ist, welches an dem, insbesondere in einer Öffnung (59) des Gargefäß fluiddicht anbringbar ist.

13. Fernbedienbare Einrichtung nach einem der vorstehenden Ansprüche von 1 bis 10, **dadurch gekennzeichnet, daß** das Gehäuse (1) der fernbedienbaren Einrichtung mit einer ringförmigen Halterung versehen ist, die unter der Schulter der Dichtung eines Überdruckventils befestigbar ist.

14. Fernbedienbare Einrichtung nach einem der vorstehenden Ansprüche, **dadurch gekennzeichnet, daß** die Antenne (13) der Sende/Empfangseinrichtung der fernbedienbaren Einrichtung durch Ankopplung an Teile (2) des Gargefäßes gebildet oder ergänzt wird.

15. Fernbedienbare Einrichtung nach einem der vorstehenden Ansprüche, ferner **gekennzeichnet durch** eine Abschalteinrichtung zum Sparen von Strom aus der Energieversorgungseinrichtung (15; 56).

16. Fernbedienbare Einrichtung nach Anspruch 15, **dadurch gekennzeichnet, daß** die jeweilige Empfangseinrichtung nur kurzzeitig innerhalb eines wesentlich längeren zeitlichen Intervalls eingeschaltet wird und nur bei Empfang von Signalen des zugeordneten Senders eine längerdauernde Einschaltung erfolgt.

17. Fernbedienbare Einrichtung nach einem der vorstehenden Ansprüche, ferner **gekennzeichnet durch** einen Temperaturund/oder Drucksensor, mit welchem die jeweiligen Zustände innerhalb des Gargefäßes oder diesen zugeordnete Zustände erfaßbar sind.

18. Fernbedienbare Einrichtung nach Anspruch 17,
**dadurch gekennzeichnet, daß** die durch die Sensoren erfassten Zustände in der fernbedienbaren Einrichtung und/oder in der Fernbedienung (3) ausgewertet werden und zur Einschaltung und/oder Ausschaltung der fernbedienbaren Einrichtung und/oder zur Betätigung des Aktuators (14; 50) verwendbar sind.

19. Fernbedienbare Einrichtung nach einem der vorstehenden Ansprüche, **dadurch gekennzeichnet, daß** das Abdampfventil mit dem Gehäuse der fernbedienbaren Einrichtung fest verbunden ist.

20. Deckel eines Gargefäßes, **gekennzeichnet durch** eine daran montierte Einrichtung nach einem der vorstehenden Ansprüche.

21. Gargefäß, **gekennzeichnet durch** eine Einrichtung nach einem der vorstehenden Ansprüche von 1 bis 18.

## Claims

1. A remote-controllable device for letting the steam off from pressurised cooking vessels, comprising:
- a remote control system (3) with a transmitter,
- a receiver (13; 47, 48, 49) disposed on the remote-controllable device and associated with the transmitter;
- an actuator (14; 50) connected to the receiver (13; 47, 48, 49) and
- an energy supply device (15; 56) for supplying the receiver (13; 47, 48, 49) and the actuator (14; 50),
wherein the actuator (14; 50) is adapted to operate at least one servo-component (8; 40) for uncovering an opening (44) on the cooking vessel.

2. A remote-controllable device according to claim 1, **characterised in that** the transmitter (3) and/or the receiver (13; 47, 48, 49) comprise a time switch.

3. A remote-controllable device according to claim 1 or 2, **characterised in that** signals between the transmitter (3) and receiver (13; 47, 48, 49) are transmitted by infrared, radio or ultrasound.

4. A remote-controllable device according to claim 1, 2 or 3, **characterised in that** the servo-component (8; 40) operated by the actuator (14; 50) is part of an exhaust-steam valve (9; 39).

5. A remote-controllable device according to claim 1, 2, 3 or 4, **characterised in that** respective bidirectional transmitters and receivers are disposed in the remote control system (3) and in the remote-controllable device, the system (3) being provided with an indicator (22) of pressure and/or temperature.

6. A remote-controllable device according to claim 5, **characterised in that** the indicator (22) comprises a signalling means for indicating abnormal cooking conditions.

7. A remote-controllable device according to claim 5 or 6, **characterised in that** the indicator (22) comprises a speech outputting unit (27).

8. A remote-controllable device according to any of the preceding claims, **characterised in that** the actuator comprises a geared motor (14) and a worm drive (16, 17).

9. A remote-controllable device according to claim 8, **characterised in that** the actuator (14) comprises a frusto-conical operating means (30) with a lateral abutment surface and adjustable in the axial direction.

10. A remote-controllable device according to claim 8, **characterised in that** the actuator (14) has a guide lever (18) movable by an eccentric operating means (17).

11. A remote-controllable device according to any of the preceding claims, also **characterised by** a casing (1) disposed between handles of an associated cooking vessel.

12. A remote-controllable device according to claim 8, **characterised in that** the casing (1) of the remote-controllable device is provided with a fluid-tight bayonet (58) attachable in fluid-tight manner to the cooking vessel, particularly in an opening (59) therein.

13. A remote-controllable device according to any of the preceding claims from 1 to 10, **characterised in that** the casing (1) of the remote-controllable device has an annular holder for fastening under the shoulder of the seal on an excess-pressure valve.

14. A remote-controllable device according to any of the preceding claims, **characterised in that** the antenna (13) of the transmitter-receiver in the remote-controllable device is formed or supplemented by coupling to parts (2) of the cooking vessel.

15. A remote-controllable device according to any of the preceding claims, also **characterised by** a device for saving current by switching off the energy supply means (15; 16).

16. A remote-controllable device according to claim 15, **characterised in that** the respective receivers are switched on only briefly during a substantially longer time interval and are switched on for longer only on receipt of signals from the associated transmitter.

17. A remote-controllable device according to one of the preceding claims, **characterised by** a temperature and/or pressure sensor for detecting the respective conditions inside or associated with the cooking vessel.

18. A remote-controllable device according to claim 17, **characterised in that** the conditions detected by the sensors are evaluated in the remote-controllable device and/or in the remote-control system (3) and are used for switching the remote-controllable device on or off and/or for operating the actuator (14; 50).

19. A remote-controllable device according to any of the preceding claims, **characterised in that** the exhaust-steam valve is permanently connected to the casing of the remote-controllable device.

20. A lid of a cooking vessel, **characterised by** a device according to any of the preceding claims being fitted on it.

21. A cooking vessel **characterised by** a device according to any of the preceding claims from 1 to 18.

## Revendications

1. Dispositif de commande à distance pour l'échappement de vapeur de récipients de cuisson sous pression, comportant :
une télécommande (3) munie d'un ensemble émetteur,
un ensemble récepteur (13 ; 47, 48, 49) agencé sur le dispositif de commande à distance et coordonné à l'ensemble émetteur,
un actionneur (14 ; 50) relié à l'ensemble récepteur (13 ; 47, 48, 49) et
un dispositif d'alimentation en énergie (15 ; 56), par l'intermédiaire duquel sont alimentés l'équipement récepteur (13 ; 47, 48, 49) et l'actionneur (14 ; 50),
de sorte que par l'intermédiaire de l'actionneur (14 ; 50), au moins un élément de réglage (8 ; 40) peut être manoeuvré pour la libération d'une ouverture (44) du récipient de cuisson.

2. Dispositif de commânde à distance selon la revendication 1, **caractérisé en ce que** l'ensemble émetteur (3) et/ou l'ensemble récepteur (13 ; 47, 48, 49) comportent une minuterie.

3. Dispositif de commande à distance selon la revendication 1 ou 2, **caractérisé en ce que** la transmission de signaux entre l'ensemble émetteur (3) et l'ensemble récepteur (13 ; 47, 48, 49) s'effectue par l'intermédiaire de signaux de radio, d'infrarouges ou par ultrasons.

4. Dispositif de commande à distance selon la revendication 1, 2 ou 3, **caractérisé en ce que** l'élément de réglage (8 ; 40) commandé par l'actionneur (14 ; 50) fait partie d'une vanne d'échappement (9; 39).

5. Dispositif de commande à distance selon la revendication 1, 2, 3 ou 4, **caractérisé en ce qu'**un ensemble émetteur/récepteur bidirectionnel est disposé respectivement dans la télécommande (3) et dans le dispositif de commande à distance, de sorte que la télécommande (3) est munie d'un affichage (22) des taux de pression et/ou de température.

6. Dispositif de commande à distance selon la revendication 5, **caractérisé en ce que** le dispositif d'affichage (22) comporte un dispositif signalant tous états de cuisson anormaux.

7. Dispositif de commande à distance selon la revendication 5 ou 6, **caractérisé en ce que** le dispositif d'affichage (22) comporte une unité de sortie vocale (27).

8. Dispositif de commande à distance selon l'une quelconque des revendications précédentes, **caractérisé en ce que** l'actionneur comporte un moteur d'entraînement (14) et une vis sans fin (16, 17).

9. Dispositif de commande à distance selon la revendication 8, **caractérisé en ce que** l'actionneur (14) comporte un organe de commande conique (30), muni d'une face d'appui latérale, pouvant se déplacer dans la direction axiale.

10. Dispositif de commande à distance selon la revendication 8, **caractérisé en ce que** l'actionneur (14) comporte un levier de renvoi (18), qui est mobile par l'intermédiaire d'un organe de commande excentré (17).

11. Dispositif de commande à distance selon l'une quelconque des revendications précédentes, **caractérisé de plus en ce qu'**il comporte un boîtier (1) qui peut être disposé entre les poignées d'un récipient concerné.

12. Dispositif de commande à distance selon la revendication 8, **caractérisé en ce que** le boîtier (1) du dispositif de commande à distance est muni d'une baïonnette étanche aux fluides (58), laquelle baïonnette peut être placée en particulier dans une ouverture (59) du récipient de manière étanche aux fluides.

13. Dispositif de commande à distance selon l'une quelconque des revendications précédentes 1 à 10, **caractérisé en ce que** le boîtier (1) du dispositif de commande à distance est muni d'un support circulaire qui peut être fixé sous l'épaulement de joint d'étanchéité d'une soupape de sûreté.

14. Dispositif de commande à distance selon l'une quelconque des revendications précédentes, **caractérisé en ce que** l'antenne (13) de l'ensemble émetteur/récepteur du dispositif de commande à distance est raccordée ou relié à une partie (2) de l'autocuiseur par l'intermédiaire d'un raccord.

15. Dispositif de commande à distance selon l'une quelconque des revendications précédentes, **caractérisé en outre par** un dispositif d'arrêt visant à économiser l'électricité de l'installation d'alimentation en énergie (15 ; 56).

16. Dispositif de commande à distance selon la revendication 15, **caractérisé en ce que** le présent équipement de réception n'est mis en marche que brièvement à des intervalles de temps plus longs, et une mise en marche plus longue ne se produit qu'à réception de signaux envoyés par l'émetteur concerné.

17. Dispositif de commande à distance selon l'une quelconque des revendications précédentes, **caractérisé de plus par** un capteur de température et/ou de pression, par l'intermédiaire duquel sont enregistrés les états présents à l'intérieur du récipient, ou des informations en rapport.

18. Dispositif de commande à distance selon la revendication 17, **caractérisé en ce que** les états saisis par les capteurs dans le dispositif de commande à distance et/ou dans la télécommande (3) sont évalués et applicables à la mise en marche et/ou l'arrêt du dispositif de commande à distance et/ou de la commande de l'actionneur (14 ; 50).

19. Dispositif de commande à distance selon l'une quelconque des revendications précédentes, **caractérisé en ce que** la soupape d'échappement est connectée au boîtier de la commande à distance.

20. Couvercle d'un autocuiseur, **caractérisé par** un dispositif monté sur celui-ci selon l'une quelconque des revendications précédentes.

21. Autocuiseur, **caractérisé par** un dispositif selon l'une des revendications de 1 à 18 précédentes.
